(19) Europäisches Patentamt
European Patent Office
Office européen des brevets

(11) EP 3 461 655 A1

(12) **EUROPÄISCHE PATENTANMELDUNG**

(43) Veröffentlichungstag:
03.04.2019 Patentblatt 2019/14

(51) Int Cl.:
*B60C 1/00* (2006.01)     *C08L 23/22* (2006.01)
*C08L 23/28* (2006.01)

(21) Anmeldenummer: 18180269.5

(22) Anmeldetag: 28.06.2018

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **27.09.2017 DE 102017217149**

(71) Anmelder: **Continental Reifen Deutschland GmbH 30165 Hannover (DE)**

(72) Erfinder:
• **Jeromin, Dieter**
  **30419 Hannover (DE)**
• **Schellenberg, Marion**
  **30171 Hannover (DE)**

(74) Vertreter: **Finger, Karsten**
  **Continental Aktiengesellschaft**
  **Patente und Lizenzen**
  **Postfach 169**
  **30001 Hannover (DE)**

(54) **FAHRZEUGLUFTREIFEN UMFASSEND EINE INNENSCHICHT UND RAD UMFASSEND DEN FAHRZEUGLUFTREIFEN**

(57) Die Erfindung betrifft einen Fahrzeugluftreifen umfassend eine Innenschicht. Ferner betrifft die Erfindung ein Rad umfassend den Fahrzeugluftreifen.

Die Innenschicht weist wenigstens eine Kautschukmischung auf, die 3 bis 25 phr wenigstens eines Butyl-Kautschuk-Ionomers enthält.

EP 3 461 655 A1

**Beschreibung**

Die Erfindung betrifft einen Fahrzeugluftreifen umfassend eine Innenschicht. Ferner betrifft die Erfindung ein Rad umfassend den Fahrzeugluftreifen.

Es ist bekannt, dass Fahrzeugluftreifen oft eine Innenschicht aufweisen, die luftdicht ausgeführt ist und hierzu meist wenigstens einen Butyl- und/oder Halobutylkautschuk enthält.

Je nach Anwendung des Reifens ist neben der Luftdichtigkeit auch das Abriebverhalten der Innenschicht relevant. Dies ist insbesondere bei Reifen, insbesondere Nutzfahrzeugreifen, der Fall, die "trotz" der luftdicht ausgeführten Innenschicht zusätzlich einen Schlauch aufweisen, wobei dann Reibung mit dem Schlauch zu Abriebverlusten führen kann.

Auch bei Fahrzeugluftreifen, in deren Innerem ein Auswuchtpulver - wie Mineralgemische (z. B. Sand) oder auf Polymerbasis beruhende Pulver- eingesetzt wird, ist die Innenschicht Abriebphänomenen ausgesetzt.

Der vorliegenden Erfindung liegt daher die Aufgabe zugrunde, einen Fahrzeugluftreifen umfassend eine Innenschicht bereitzustellen, wobei die Innenschicht eine verbesserte Abriebresistenz aufweist. Gleichzeitig sollen die Zugfestigkeit und die Verarbeitbarkeit, insbesondere das Kaltflussverhalten, ebenfalls optimiert werden. Die übrigen Eigenschaften sollen auf einem vergleichbaren Niveau bleiben.

Gelöst wird die Aufgabe erfindungsgemäß dadurch, dass die Innenschicht wenigstens eine Kautschukmischung aufweist, die 3 bis 25 phr wenigstens eines Butyl-Kautschuk-Ionomers enthält.

Überraschenderweise wurde gefunden, dass die Innenschicht eines Fahrzeugluftreifens hierdurch eine überraschend gute Abriebresistenz aufweist. Zusätzlich bleiben die übrigen Eigenschaften auf vergleichbarem Niveau, wobei Zugfestigkeit und die Kaltflusseigenschaften ebenfalls verbessert werden.

Ein weiterer Gegenstand der vorliegenden Erfindung ist ein Rad, welches einen erfindungsgemäßen Fahrzeugluftreifen und einen Schlauch umfasst. Für den erfindungsgemäßen Fahrzeugluftreifen des erfindungsgemäßen Rades gelten sämtliche beschriebenen Ausführungsformen.

Wie eingangs erläutert, ist die Innenschicht eines Reifens, der zusätzlich einen Schlauch aufweist, durch Materialreibung Abrieb ausgesetzt. Hierdurch wird die Luftdichtigkeit des Fahrzeugluftreifens beeinträchtigt. Das erfindungsgemäße Rad weist den Vorteil auf, dass es wie beschrieben einen Fahrzeugluftreifen mit abrieboptimierter Innenschicht aufweist. Dadurch ist der Abrieb der Innenschicht deutlich geringer oder gar nicht mehr vorhanden.

Ein weiterer Gegenstand der vorliegenden Erfindung ist ein Rad, welches einen erfindungsgemäßen Fahrzeugluftreifen und Auswuchtpulver umfasst. Beispielsweise handelt es sich bei dem Auswuchtpulver um ein Mineralgemisch, wie beispielsweise Sand, oder basiert auf einem Polymer, wie beispielsweise kommerziell erhältliche Polymer-Granulate. Auch ein Auswuchtpulver kann zum Abrieb der Innenschicht führen. Das erfindungsgemäße Rad weist den Vorteil auf, dass es wie beschrieben einen Fahrzeugluftreifen mit abrieboptimierter Innenschicht aufweist. Dadurch ist der Abrieb der Innenschicht deutlich geringer oder gar nicht mehr vorhanden.

Der Fahrzeugluftreifen ist bei erfindungsgemäßen Ausführungsformen des Rades insbesondere auf einer Felge montiert.

Insbesondere sind unter Fahrzeugluftreifen alle bekannten Reifentypen umfasst, wie insbesondere PKW-Reifen, LKW-Reifen, Zweiradreifen.

Die in dieser Schrift verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Butyl-Kautschuk-Ionomere sind dem Fachmann bekannt und beispielsweise in der US 20160215131 A1 offenbart. Es handelt sich um Butyl-Kautschuk, der einen Anteil an ionischen Gruppen aufweist.

Bevorzugt weist das Butyl-Kautschuk-Ionomer sämtlicher Ausführungsformen einen Ionen-Gehalt von 0,2 bis 1,0 mol-% auf. Ein geeignetes Butyl-Kautschuk-Ionomer ist unter dem Handelsnamen X_Butyl™ I4565 P der Firma Lanxess erhältlich.

Erfindungsgemäß enthält die wenigstens eine Kautschukmischung der Innenschicht 3 bis 25 phr wenigstens eines Butyl-Kautschuk-Ionomers. Falls mehrere Butyl-Kautschuk-Ionomer enthalten sind, beziehen sich die Mengenangaben auf die Gesamtmenge an Butyl-Kautschuk-Ionomeren, sofern nichts anderes angegeben ist. Unter "wenigstens eine Kautschukmischung der Innenschicht" ist zu verstehen, dass die Innenschicht auch zwei oder mehr Kautschukmischungen umfassen kann. Erfindungswesentlich enthält dann wenigstens eine Kautschukmischung 3 bis 25 phr bzw. bevorzugte und besonders bevorzugte Mengen gemäß vorteilhafter Ausführungsformen.

Gemäß einer vorteilhaften Ausführungsform der Erfindung beträgt die Menge des wenigstens einen Butyl-Kautschuk-Ionomers 3 bis 13 phr, besonders bevorzugt 7 bis 13 phr, ganz besonders bevorzugt 8 bis 12 phr, beispielsweise 10 phr.

Gemäß dieser Ausführungsform weist die Kautschukmischung ein besonders geringes Abriebverhalten auf und damit eine besonders hohe Abriebresistenz. Gleichzeitig sind die Kaltflusseigenschaften verbessert.

Gemäß einer weiteren vorteilhaften Ausführungsform der Erfindung beträgt die Menge des wenigstens einen Butyl-Kautschuk-Ionomers 17 bis 25 phr, besonders bevorzugt 17 bis 23 phr, ganz besonders bevorzugt 18 bis 22 phr, beispielsweise 20 phr.

Gemäß dieser Ausführungsform weist die Kautschukmischung ein besonders geringes Abriebverhalten auf und damit eine besonders hohe Abriebresistenz. Gleichzeitig sind die Kaltflusseigenschaften deutlich verbessert.

Gemäß bevorzugten Ausführungsformen der Erfindung enthält die wenigstens eine Kautschukmischung der Innenschicht 75 bis 97 phr wenigstens eines Butyl- und/oder Halobutyl-Kautschuks. Die genannten Kautschuke sind dem Fachmann bekannt, wobei als Halobutyl-Kautschuk insbesondere Chlorobutyl-Kautschuk und Bromobutyl-Kautschuk bekannt sind.

Gemäß bevorzugten Ausführungsformen der Erfindung besteht das Kautschuksystem der wenigstens einen Kautschukmischung der Innenschicht aus 75 bis 97 phr wenigstens eines Butyl- und/oder Halobutyl-Kautschuks und 3 bis 25 phr wenigstens eines Butyl-Kautschuk-Ionomers, wobei die Summe der enthaltenen Butyl- und/oder Halobutyl-Kautschuke und Butyl-Kautschuk-Ionomers 100 phr ergibt.

Dies gilt insbesondere auch für die oben genannten bevorzugten Mengen an Butyl-Kautschuk-Ionomer der einzelnen Ausführungsformen.

Im Folgenden werden weitere Bestandteile der wenigstens einen Kautschukmischung der Innenschicht näher ausgeführt.

Die Kautschukmischung enthält gemäß vorteilhafter Ausführungsformen wenigstens einen anorganischen Füllstoff. Anorganische Füllstoffe umfassen inaktive anorganische Füllstoffe und aktive Füllstoffe, wie insbesondere Kieselsäuren und Industrieruße. Zinkoxid zählt im Rahmen der vorliegenden Erfindung nicht zu den Füllstoffen.

Inaktive anorganische Füllstoffe sind insbesondere Füllstoffe wie Calciumcarbonat oder, wie im Stand der Technik bekannt, plättchenförmige Füllstoffe, wie Schichtsilikate und/oder Trockengemisch-Verbindungen, die wenigstens 25 Gew.-% zumindest einer delaminierten Alumohydrosilikat-Modifikation enthalten, wobei die delaminierte Alumohydrosilikat-Modifikation ein Zweischichtgitter aufweist. Derartige Füllstoffe sind in der WO 2010034592 A1 beschrieben.

Der plättchenförmige Füllstoff lässt sich durch die Form der Partikel beschreiben, wobei der so genannte aspect ratio bestimmt wird.

Es hat sich als vorteilhaft erwiesen, wenn der aspect ratio, d.h. das Verhältnis Länge zu Breite der Partikel (L / B), zwischen 1,0 bis 2,8, bevorzugt zwischen 1,0 bis 2,0 und besonders bevorzugt zwischen 1,2 bis 1,5, beträgt. Zur Ermittlung des aspect ratios wurden die Partikel mit Hilfe eines automatischen Bildanalyseverfahrens mit CCD-Detektor, Sysmex FPIA-3000 der Firma Malvern Instruments Ltd., vermessen. Für weitere Details bezüglich der Messanalytik sei an dieser Stelle auf die entsprechenden Datenblätter und Informationen des genannten Herstellers verwiesen, welche zum Teil auch auf dessen Homepage verfügbar sind.

Weiterhin beträgt der Schichtindex (lamellarity index) der delaminierten Alumohydrosilikat-Modifikation 2 bis 15, bevorzugt 2 bis 10, besonders bevorzugt 2 bis 5. Der Schichtindex ist ein Maß für die Morphologie, d. h. für den Grad der Delaminierung (Entblätterung der Schichten); bei gleicher Feinheit der delaminierten Alumohydrosilikat-Modifikation (bestimmt durch Laserbeugung) zeigt ein höherer Schichtindex eine höhere Struktur an. Der Schichtindex wird ermittelt durch folgende Formel ermittelt:

$$\text{Schichtindex} = \frac{(\text{Partikelgröße aus Laserbeugung}) - (\text{Partikelgröße aus Sedimentation})}{(\text{Partikelgröße aus Sedimentation})}$$

Für die Ermittlung der Partikelgröße durch Sedimentation wurde ein SediGraph 5100 Partikelgrößenmessgerät der Firma Micromeritics Instruments, Deutschland verwendet. Bevorzugt handelt es sich bei dem Schichtsilikat um Talk. Talk ist ein Magnesiumsilikat mit der Formel $Mg_3[(OH)_2/Si_4O_{10}]$, wie es beispielsweise dem Römpp-Online-Lexikon, © 2016 Georg Thieme Verlag KG (Stand 08.01.2016) zu entnehmen ist. Talk ist ein Dreischicht-Phyllosilikat.

Die Trockengemisch-Verbindung hat bevorzugt einen Wassergehalt von 0 bis 2%, bevorzugt von 0 bis 1%. Dieser Wassergehalt ist im Wesentlichen, aber nicht ausschließlich, auf das Vorhandensein von Kristallwasser zurückzuführen.

Das Zweischichtgitter der delaminierten Alumohydrosilikat-Modifikation ist bevorzugt ein dioktaedrisches Zweischichtgitter.

Bevorzugt ist es, wenn es sich bei der delaminierten Alumohydrosilikat-Modifikation um delaminiertes $Al_2[(OH)_4/Si_2O_5]$ handelt, was auch unter dem Namen Kaolinit bekannt ist. Bei der Trockengemisch-Verbindung kann es sich somit um ein Kaolin handeln.

In einer besonders bevorzugten Ausführungsform enthält die Trockengemisch-Verbindung zusätzlich wenigstens 40% eines di- oder trioktaedrischen Dreischichtsilikates aus der Gruppe der Phyllosilikate und/oder wenigstens 10% einer kristallinen Quarzmodifikation oder amorphen Quarz. Die Prozentangabe bezieht sich dabei auf das Gesamtgewicht der Trockengemisch-Verbindung.

Bezüglich der Klassifizierung der di-oder trioktaedrischen Dreischichtsilikate sei beispielhaft auf Matthes, Mineralogie, Springer-Lehrbuch, 3. Auflage, 1990, S. 129 ff, verwiesen.

Bei dem Calciumcarbonat ($CaCO_3$), wenn in der Mischung vorhanden, handelt es sich bevorzugt um Calcit oder Kreide, welche einen $CaCO_3$-Gehalt von mindestens 98 % aufweist.

Gemäß einer vorteilhaften Ausführungsform der Erfindung enthält die Kautschukmischung wenigstens einen anorganischen inaktiven Füllstoff, bevorzugt in Mengen von 4 bis 50 phr.

Besonders bevorzugt ist der anorganische inaktive Füllstoff ausgewählt aus der Gruppe bestehend aus Calciumcarbonat oder plättchenförmigen Füllstoffen ausgewählt aus der Gruppe bestehend aus Talk und Kaolin, wobei auch ein Gemisch aus mehreren der genannten Füllstoffe denkbar ist.

Gemäß einer vorteilhaften Ausführungsform der Erfindung enthält die Kautschukmischung Kaolin, bevorzugt in Mengen von 4 bis 50 phr.

Bevorzugt enthält die Kautschukmischung wenigstens einen Industrieruß, bevorzugt in Mengen von 2 bis 100 phr, besonders bevorzugt 30 bis 70 phr.

Bei dem Industrieruß kann es sich um alle dem Fachmann bekannten Rußtypen handeln. Bevorzugte und bekannte Ruße sind insbesondere Ruße mit einer DBP-Zahl gemäß ASTM D 2414 von 60 bis 130 ml/100 g, bevorzugt 75 bis 95 ml/100 g.

Die DBP-Zahl gemäß ASTM D 2414 bestimmt das spezifische Absorptionsvolumen eines Rußes mittels Dibutylphthalat. Ein bevorzugter und geeigneter Ruß ist beispielsweise der Ruß N 660 mit einer Jodadsorptionszahl gemäß ASTM D 1510 von 36 g/kg und einer DBP-Zahl gemäß ASTM D 2414 von 90 ml/100g.

Es ist wie oben aufgeführt denkbar, dass die Kautschukmischung wenigstens eine Kieselsäure als anorganischen aktiven Füllstoff enthält.

Bei der Kieselsäure kann es sich um die dem Fachmann bekannten Kieselsäuretypen, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m2/g, bevorzugt von 35 bis 260 m2/g, besonders bevorzugt von 100 bis 260 $m^2$/g und ganz besonders bevorzugt von 130 bis 235 m2/g, und eine CTAB-Oberfläche (gemäß ASTM D 3765) von 30 bis 400 m2/g, bevorzugt von 30 bis 250 $m^2$/g, besonders bevorzugt von 100 bis 250 $m^2$/g und ganz besonders bevorzugt von 110 bis 230 $m^2$/g, aufweist. Derartige Kieselsäuren führen zu Vorteilen in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Die erfindungsgemäße Kautschukmischung kann bevorzugt möglichst geringe Mengen d.h. bevorzugt 0 bis 10 phr, besonders bevorzugt 0 bis 2 phr, weitere Füllstoffe enthalten. Zu den weiteren (nicht verstärkenden) Füllstoffen zählen im Rahmen der vorliegenden Erfindung Stärke, Magnesiumoxid, Titandioxid oder Kautschukgele sowie Fasern (wie zum Beispiel Aramidfasern, Glasfasern, Carbonfasern, Cellulosefasern).

Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".

Falls in der Kautschukmischung zumindest eine Kieselsäure enthalten ist, ist zudem bevorzugt wenigstens ein Kupplungsagens, in Form von Silan oder einer siliziumorganischen Verbindung, enthalten. Hierbei können ein oder mehrere verschiedene Silan-Kupplungsagenzien in Kombination miteinander eingesetzt werden. Die Kautschukmischung kann somit ein Gemisch verschiedener Silane enthalten.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Es können in der Kautschukmischung noch 0 bis 100 phr, bevorzugt 0,1 bis 70 phr, bevorzugt 0,1 bis 30 phr, zumindest eines Weichmachers vorhanden sein.

Hierzu gehören alle dem Fachmann bekannten Weichmacher wie aromatische, naphthenische oder paraffinische Mineralölweichmacher, z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Faktisse oder Weichmacherharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.

Der Weichmacher ist bevorzugt ausgewählt aus der Gruppe bestehend aus den oben genannten Weichmachern. Mineralöle sind als Weichmacher besonders bevorzugt.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Des Weiteren kann die Kautschukmischung übliche Zusatzstoffe in üblichen Gewichtsteilen enthalten. Zu diesen Zusatzstoffen zählen

a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),

b) Aktivatoren, wie z. B. Zinkoxid und Fettsäuren (z. B. Stearinsäure),

c) Wachse,

d) Harze, insbesondere Klebharze, die keine Weichmacherharze sind,

e) Mastikationshilfsmittel, wie z. B. 2,2'-Dibenzamidodiphenyldisulfid (DBD und

f) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m$^2$/g auf. Es kann aber auch ein Zinkoxid mit einer BET-Oberfläche von 10 bis 100 m2/g, wie z.B. so genannte "nano-Zinkoxide", verwendet werden.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Vulkanisation der wenigstens einen Kautschukmischung der Innenschicht wird bevorzugt in Anwesenheit von Schwefel und/oder Schwefelspendern und mit Hilfe von Vulkanisationsbeschleunigern durchgeführt, wobei einige Vulkanisationsbeschleuniger zugleich als Schwefelspender wirken können und Schwefel und/oder Schwefelspender sowie Vulkanisationsbeschleuniger in den im Stand der Technik bekannten Mengen eingesetzt werden.

Schwefel und/oder Schwefelspender sowie ein oder mehrere Beschleuniger werden im letzten Mischungsschritt in den genannten Mengen der Kautschukmischung zugesetzt.

Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder 2,2'-Dibenzothiazyldisulfid (MBTS) und/oder N-tert.Butyl-2-benzothiazylsulfenamid (TBBS).

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt, wobei Substanzen, die auch eine vulkanisationsverzögernde Wirkung haben, wie MBTS, auch in einer der Grundmischstufen zugegeben werden können. Die Fertigmischung wird z.B. durch einen Extrusions- oder Kalandriervorgang weiterverarbeitet und in die entsprechende Form gebracht.

Dem Fachmann sind allgemein Verfahren zur Herstellung von Fahrzeugreifen, umfassend eine Innenschicht bekannt.

Die Erfindung soll nun anhand von Vergleichs- und Ausführungsbeispielen, die in Tabelle 1 zusammengefasst sind, näher erläutert werden. Die mit "E" gekennzeichneten Mischungen sind hierbei Mischungen der Innenschicht von erfindungsgemäßen Fahrzeugluftreifen, während es sich bei den mit "V" gekennzeichneten Mischungen um Vergleichsbeispiele handelt.

Die Mischungsherstellung erfolgte nach dem in der Kautschukindustrie üblichen Verfahren unter üblichen Bedingungen in zwei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 175 °C, Zieltemperaturen von 152 bis 167 °C, vermischt wurden. Durch Zugabe des Vulkanisationssystems in der zweiten Stufe (Fertigmischstufe) wurde die Fertigmischung erzeugt, wobei für 180 bis 300 Sekunden bei 90 bis 120 °C gemischt wurde.

Aus sämtlichen Mischungen wurden Prüfkörper durch Vulkanisation nach $t_{95}$ (gemessen am Moving Disc Rheometer gemäß ASTM D 5289-12/ ISO 6502) unter Druck bei 160°C hergestellt und mit diesen Prüfkörpern für die Kautschukindustrie typische Materialeigenschaften mit den im Folgenden angegebenen Testverfahren ermittelt.

- Shore-A-Härte bei Raumtemperatur (RT) und 70 °C mittels Durometer gemäß DIN ISO 7619-1
- Rückprallelastizität bei RT und 70°C gemäß DIN 53 512
- Zugfestigkeit, Bruchdehnung, Spannungswert bei 300% Dehnung (M300) bei Raumtemperatur (RT) gemäß DIN 53 504
- Abrieb bei Raumtemperatur gemäß DIN/ISO 4649
- Kaltfluss in Anlehnung an ISO1133; Angabe der Verformung in %.

Verwendete Substanzen

a) Chlorobutyl-Kautschuk
b) X_Butyl™ I4565 P, Fa. Lanxess
c) Weichmacher, Stearinsäure, ZnO, Verarbeitungshilfsmittel
d) Schwefel und Beschleuniger

Wie an Tabelle 1 erkennbar, weisen die erfindungsgemäßen Kautschukmischungen E1 bis E4 im Vergleich zu V1 eine verbesserte Abriebbeständigkeit und bessere Kaltflusseigenschaften auf. Die Kaltflusseigenschaften sind ein Maß für die Verarbeitbarkeit, wobei eine geringere Verformung vorteilhaft ist.

E2 weist überraschenderweise ein besonders gutes Abriebverhalten und eine vergleichsweise hohe Bruchdehnung auf. E4 weist überraschenderweise ein besonders gutes Abriebverhalten und sehr gute Kaltflusseigenschaften auf. Die Innenschicht des erfindungsgemäßen Fahrzeugluftreifens ist somit hinsichtlich Abrieb optimiert.

Tabelle 1

| Bestandteile | Einheit | V1 | E1 | E2 | E3 | E4 |
|---|---|---|---|---|---|---|
| CIIR [a] | phr | 100 | 95 | 90 | 85 | 80 |
| Ionomer [b] | phr | - | 5 | 10 | 15 | 20 |
| Ruß N660 | phr | 55 | 55 | 55 | 55 | 55 |
| Sonstige Zusatzstoffe [c] | phr | 21 | 21 | 21 | 21 | 21 |
| Vulka [d] | phr | 1,8 | 1,8 | 1,8 | 1,8 | 1,8 |
| | | | | | | |
| **Eigenschaften** | | | | | | |
| Härte RT | Shore A | 48 | 51 | 48 | 50 | 50 |
| Härte 70 °C | Shore A | 37 | 40 | 36 | 37 | 37 |
| Rückpr. RT | % | 9 | 9 | 9 | 9 | 9,5 |
| Rückpr. 70 °C | % | 36 | 37 | 37 | 36 | 37 |
| M300 | MPa | 2,9 | 3,4 | 3,0 | 3,3 | 3,6 |
| Zugfestigkeit | MPa | 8,7 | 9,1 | 8,9 | 9,4 | 9,0 |

(fortgesetzt)

| Eigenschaften | | | | | | |
|---|---|---|---|---|---|---|
| Bruchdehnung | % | 934 | 895 | 889 | 910 | 833 |
| Abrieb | mm$^3$ | 745 | 642 | 616 | 676 | 620 |
| Kaltfluss | % | 38 | 30 | 23 | 16 | 14 |

**Patentansprüche**

1. Fahrzeugluftreifen mit einer Innenschicht, **dadurch gekennzeichnet, dass** die Innenschicht wenigstens eine Kautschukmischung aufweist, die 3 bis 25 phr wenigstens eines Butyl-Kautschuk-Ionomers enthält.

2. Fahrzeugluftreifen nach Anspruch 1, **dadurch gekennzeichnet, dass** die Menge des wenigstens einen Butyl-Kautschuk-Ionomers 3 bis 13 phr beträgt.

3. Fahrzeugluftreifen nach Anspruch 2, **dadurch gekennzeichnet, dass** die Menge des wenigstens einen Butyl-Kautschuk-Ionomers 7 bis 13 phr beträgt.

4. Fahrzeugluftreifen nach Anspruch 1, **dadurch gekennzeichnet, dass** die Menge des wenigstens einen Butyl-Kautschuk-Ionomers 17 bis 25 phr beträgt.

5. Fahrzeugluftreifen nach einem der vorherigen Ansprüche, **dadurch gekennzeichnet, dass** die Kautschukmischung 75 bis 97 phr wenigstens eines Butyl- und/oder Halobutyl-Kautschuks enthält.

6. Fahrzeugluftreifen nach einem der vorherigen Ansprüche, **dadurch gekennzeichnet, dass** die Kautschukmischung Kaolin enthält.

7. Rad umfassend einen Fahrzeugluftreifen nach einem der Ansprüche 1 bis 6 und einen Schlauch.

8. Rad umfassend einen Fahrzeugluftreifen nach einem der Ansprüche 1 bis 6 und Auswuchtpulver.

9. Rad nach Anspruch 8, wobei das Auswuchtpulver ein Mineralgemisch, beispielsweise Sand, ist.

10. Rad nach Anspruch 8, wobei das Auswuchtpulver auf einem Polymer basiert.

**Europäisches Patentamt**
**European Patent Office**
**Office européen des brevets**

# EUROPÄISCHER RECHERCHENBERICHT

Nummer der Anmeldung

EP 18 18 0269

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | US 2016/215131 A1 (ADKINSON DANA K [CA] ET AL) 28. Juli 2016 (2016-07-28) * Ansprüche 1-3,17,18; Beispiele 9-14,20,2123,24, * ----- | 1-10 | INV. B60C1/00 C08L23/22 C08L23/28 |
| X | EP 2 987 828 A1 (LANXESS INC [CA]) 24. Februar 2016 (2016-02-24) * Absätze [0004], [0037]; Ansprüche 1,4,19,20; Beispiele 2-7,9,11,12,14,15 * ----- | 1-4,6-10 | |
| A | EP 3 015 521 A1 (LANXESS INC [CA]) 4. Mai 2016 (2016-05-04) * Absätze [0004], [0005]; Beispiele 2-4; Tabelle 1 * ----- | 1-10 | |
| A | US 2016/304634 A1 (DAVIDSON GREGORY J E [CA] ET AL) 20. Oktober 2016 (2016-10-20) * Absätze [0006], [0007], [0073] - [0079]; Beispiele 1-71 * ----- | 1-10 | |
| A | US 2009/182095 A1 (RESENDES RUI [CA] ET AL) 16. Juli 2009 (2009-07-16) * das ganze Dokument * ----- | 1-10 | **RECHERCHIERTE SACHGEBIETE (IPC)** B60C C08L |

Der vorliegende Recherchenbericht wurde für alle Patentansprüche erstellt

| Recherchenort | Abschlußdatum der Recherche | Prüfer |
|---|---|---|
| München | 22. Januar 2019 | Adams, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**   EP 18 18 0269

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-01-2019

| Im Recherchenbericht angeführtes Patentdokument | Datum der Veröffentlichung | Mitglied(er) der Patentfamilie | Datum der Veröffentlichung |
|---|---|---|---|
| US 2016215131 A1 | 28-07-2016 | CA 2923634 A1 | 12-03-2015 |
| | | CN 105705575 A | 22-06-2016 |
| | | EP 3044261 A1 | 20-07-2016 |
| | | JP 2016531189 A | 06-10-2016 |
| | | KR 20160054542 A | 16-05-2016 |
| | | RU 2016113503 A | 16-10-2017 |
| | | SG 11201601690T A | 28-04-2016 |
| | | US 2016215131 A1 | 28-07-2016 |
| | | WO 2015032000 A1 | 12-03-2015 |
| EP 2987828 A1 | 24-02-2016 | CA 2958497 A1 | 25-02-2016 |
| | | CN 106687529 A | 17-05-2017 |
| | | EP 2987828 A1 | 24-02-2016 |
| | | EP 3183300 A1 | 28-06-2017 |
| | | JP 2017524060 A | 24-08-2017 |
| | | KR 20170043643 A | 21-04-2017 |
| | | RU 2017109414 A | 24-09-2018 |
| | | SG 11201701151V A | 30-03-2017 |
| | | US 2017233563 A1 | 17-08-2017 |
| | | WO 2016026037 A1 | 25-02-2016 |
| EP 3015521 A1 | 04-05-2016 | EP 3015521 A1 | 04-05-2016 |
| | | WO 2015127562 A1 | 03-09-2015 |
| | | WO 2015127564 A1 | 03-09-2015 |
| US 2016304634 A1 | 20-10-2016 | BR 112013012677 A2 | 06-09-2016 |
| | | CA 2817251 A1 | 28-06-2012 |
| | | CN 103228681 A | 31-07-2013 |
| | | EP 2643361 A1 | 02-10-2013 |
| | | JP 6297330 B2 | 20-03-2018 |
| | | JP 2013543913 A | 09-12-2013 |
| | | KR 20140000285 A | 02-01-2014 |
| | | MX 350499 B | 07-09-2017 |
| | | PL 2643361 T3 | 31-07-2017 |
| | | RU 2013128413 A | 27-12-2014 |
| | | SG 190275 A1 | 28-06-2013 |
| | | SG 10201601343S A | 30-03-2016 |
| | | TW 201235359 A | 01-09-2012 |
| | | US 2014051810 A1 | 20-02-2014 |
| | | US 2016304634 A1 | 20-10-2016 |
| | | WO 2012083419 A1 | 28-06-2012 |
| US 2009182095 A1 | 16-07-2009 | CA 2616410 A1 | 01-03-2007 |
| | | CN 101253241 A | 27-08-2008 |
| | | EP 1922361 A1 | 21-05-2008 |
| | | JP 2009506138 A | 12-02-2009 |

EPO FORM P0461

Für nähere Einzelheiten zu diesem Anhang : siehe Amtsblatt des Europäischen Patentamts, Nr.12/82

Seite 1 von 2

**EP 3 461 655 A1**

**ANHANG ZUM EUROPÄISCHEN RECHERCHENBERICHT
ÜBER DIE EUROPÄISCHE PATENTANMELDUNG NR.**

EP 18 18 0269

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-01-2019

| Im Recherchenbericht angeführtes Patentdokument | Datum der Veröffentlichung | Mitglied(er) der Patentfamilie | Datum der Veröffentlichung |
|---|---|---|---|
| | | KR 20080039436 A | 07-05-2008 |
| | | US 2009182095 A1 | 16-07-2009 |
| | | WO 2007022618 A1 | 01-03-2007 |

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160215131 A1
- WO 2010034592 A1
- EP 2589619 A1
- WO 2010049216 A2

**In der Beschreibung aufgeführte Nicht-Patentliteratur**

- Römpp-Online-Lexikon. Georg Thieme Verlag KG, 08. Januar 2016
- **MATTHES.** Mineralogie. Springer-Lehrbuch, 1990, 129 ff